# FASCICULE DE BREVET EUROPEEN

(11) **EP 0 727 557 B1**
(45) Date de publication et mention de la délivrance du brevet: **07.06.2000**
(21) Numéro de dépôt: 96400266.1
(22) Date de dépôt: 09.02.1996
(51) Int. Cl.: E06B 3/677, C01B 23/00

(54) **Procédé d'introduction d'un gaz de remplissage dans une enceinte et installation de mise en oeuvre**
Verfahren und Vorrichtung zum Füllen von einem Gehäuse mit Füllgas
Process and installation for charging a filling gas into an enclosure

(30) Priorité: 17.02.1995 FR 9501837
(43) Date de publication de la demande: 21.08.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Crozel, Didier, F-59161 Escaudoeuvres (FR)
(74) Mandataire: Vesin, Jacques

(56) Documents cités:
- EP-A- 0 451 050
- EP-A- 0 498 787
- EP-A- 0 615 044
- US-A- 5 344 480

## Description

La présente invention concerne un procédé d'introduction d'un gaz de remplissage dans une enceinte contenant initialement un gaz d'attente, ce procédé comportant une étape d'introduction du gaz de remplissage dans l'enceinte, ainsi qu'une étape d'extraction d'un gaz spécifique contenu initialement dans le gaz de remplissage ou le gaz d'attente à partir d'un mélange recueilli en sortie de l'enceinte et éventuellement une étape de recyclage de ce gaz spécifique extrait. L'invention concerne également une installation pour la mise en oeuvre de ce procédé.

De nombreux procédés industriels mettent en oeuvre un ou plusieurs gaz spécifiques à l'intérieur d'une enceinte de confinement, et comportent une étape d'introduction et de remplissage total ou partiel de l'enceinte avec un gaz de remplissage constitué en partie ou totalement du ou des gaz spécifiques.

Avant l'introduction du gaz de remplissage, l'enceinte contient un gaz de nature différente, de l'air ambiant par exemple.

Ainsi, au cours de l'introduction du gaz de remplissage dans l'enceinte, il y a mélange de celui-ci avec le gaz présent auparavant. Il peut être intéressant de récupérer le gaz spécifique rejeté ou évacué à la sortie de ladite enceinte, notamment en vue de son recyclage dans la même application.

En effet, les gaz spécifiques peuvent être d'un coût de production élevé ou encore constituer des agents polluants qu'il n'est pas souhaitable de rejeter directement dans l'atmosphère.

Ainsi, certains procédés de mise en oeuvre d'un gaz spécifique comportent une étape d'extraction de ce gaz spécifique du mélange recueilli à la sortie de l'enceinte. Cependant, le gaz spécifique se trouvant mélangé à d'autres gaz de nature quelconque déjà présents dans ladite enceinte avant l'introduction du gaz de remplissage, son extraction est souvent difficile, voire impossible à réaliser dans des conditions économiques satisfaisantes.

Ainsi, même dans le cas de gaz spécifiques ayant un coût de production élevé, le coût d'extraction de ceux-ci du mélange obtenu à la sortie de l'enceinte est souvent supérieur au coût de production du gaz spécifique, ce qui rend non rentable la mise en oeuvre de tels procédés d'extraction.

Par suite, dans de nombreuses applications, la mise en oeuvre de certains gaz spécifiques de coût de production élevé et/ou très toxiques n'est pas envisageable, du fait de l'impossibilité d'extraire et de recycler, pour un coût raisonnable, le gaz spécifique utilisé du mélange rejeté de l'enceinte lors de la mise en oeuvre du procédé.

Des problèmes analogues sont observés lorsque l'on veut vider l'enceinte du gaz spécifique qu'elle contient en introduisant dans celle-ci un autre gaz tel que de l'air, tout en extrayant le gaz spécifique du mélange ainsi obtenu en sortie de l'enceinte.

Le document EP-A-498 787 illustre l'état de la technique du remplissage de l'espace inter-parois de vitrages multiples, mettant en oeuvre une phase d'extraction et récupération du gaz spécifique utilisé pour le remplissage.

L'invention a pour but de fournir un procédé d'introduction d'un gaz de remplissage dans une enceinte, permettant une extraction facile du gaz spécifique du mélange rejeté à la sortie de l'enceinte, qui soit simple et fiable, et dont le coût de mise en oeuvre est limité.

A cet effet, l'invention a pour objet un procédé d'introduction d'un gaz de remplissage dans une enceinte contenant initialement un gaz d'attente, ce procédé comportant une étape d'introduction du gaz de remplissage dans l'enceinte ainsi qu'une étape d'extraction d'un gaz spécifique contenu initialement dans le gaz de remplissage ou le gaz d'attente à partir d'un mélange recueilli en sortie de l'enceinte, et éventuellement une étape de recyclage de ce gaz spécifique extrait, caractérisé en ce qu'avant l'étape d'introduction du gaz de remplissage, l'enceinte est purgée au moyen d'un gaz de purge différent des gaz de remplissage et d'attente.

Selon des modes particuliers de mise en oeuvre, le procédé peut comporter l'une ou plusieurs des caractéristiques suivantes :
- le gaz de purge est choisi de telle sorte que ledit gaz spécifique soit plus facilement extractible du mélange qu'il forme avec le gaz de purge que du mélange qui aurait été formé par les gaz d'attente et de remplissage en l'absence d'utilisation dudit gaz de purge ;
- ladite facilité d'extraction se rapporte à un type déterminé de procédé d'extraction ;
- ledit mélange est recueilli pendant l'étape d'introduction du gaz de remplissage, ledit gaz spécifique extrait étant contenu initialement dans le gaz de remplissage ;
- le procédé comporte en outre après l'étape d'introduction du gaz de remplissage une succession d'étapes alternées de purge de l'enceinte avec du gaz de purge et d'étapes d'introduction du gaz de remplissage dans l'enceinte, ainsi que des étapes d'extraction du gaz spécifique du mélange recueilli en sortie de l'enceinte au moins lors de chacune desdites étapes de purge ;
- ledit mélange est recueilli au moins pendant l'étape de purge de l'enceinte, ledit gaz spécifique étant initialement contenu dans le gaz d'attente ;
- l'introduction du gaz de remplissage est poursuivie jusqu'au remplissage pratiquement total de ladite enceinte avec le gaz de remplissage ;
- le gaz de purge est extrait des mélanges recueillis en sortie de l'enceinte et éventuellement recyclé ;
- le gaz de purge est récupéré et éventuellement recyclé lors de l'extraction du gaz spécifique ;
- l'étape d'extraction est une étape de distillation sélective ou de séparation par simple refroidissement et le gaz de purge et le gaz spécifique ont des points d'ébullition plus éloignés l'un de l'autre que le gaz spécifique et le mélange qui aurait été formé par le gaz d'attente et le gaz de remplissage ;
- l'étape d'extraction est une étape d'adsorption sélective, au moyen d'un adsorbant ayant une sélectivité vis-à-vis des deux gaz supérieure à celle qu'il présente vis-à-vis du gaz spécifique et du mélange qui aurait été formé par le gaz d'attente et le gaz de remplissage ;
- l'étape d'extraction est une perméation sélective qui met en oeuvre une membrane de perméation ayant une sélectivité vis-à-vis des deux gaz supérieure à celle qu'elle présente vis-à-vis du gaz spécifique et du mélange qui aurait été formé par le gaz d'attente et le gaz de remplissage ;
- l'étape d'extraction est une étape d'absorption sélective, au moyen d'un absorbant ayant une sélectivité vis-à-vis des deux gaz supérieure à celle qu'il présente vis-à-vis du gaz spécifique et du mélange qui aurait été formé par le gaz d'attente et le gaz de remplissage ;
- le gaz spécifique contient de l'argon, ou du néon, ou du krypton, ou du xénon, ou de l'hexafluorure de soufre, et le gaz de purge contient de l'argon, ou du dioxyde de carbone, ou de l'hélium ou de l'hydrogène;
- le procédé est appliqué au remplissage de l'interparoi de vitrages multiples avec ledit gaz de remplissage ;

L'invention concerne par ailleurs un procédé de mise en oeuvre d'un gaz spécifique dans une enceinte contenant initialement un gaz d'attente, ce procédé comportant une étape d'introduction d'un gaz de remplissage contenant du gaz spécifique dans l'enceinte, caractérisé en ce qu'avant l'étape d'introduction du gaz de remplissage, l'enceinte est purgée au moyen d'un gaz de purge différent des gaz de remplissage et d'attente, en ce qu'il est prévu une étape d'extraction du gaz spécifique du mélange recueilli en sortie de l'enceinte pendant l'étape d'introduction du gaz de remplissage, en ce qu'après l'étape d'introduction du gaz de remplissage, l'enceinte est à nouveau purgée au moyen d'un gaz de purge différent des gaz de remplissage et d'attente, avant d'introduire à nouveau dans l'enceinte du gaz d'attente, et en ce qu'il est prévu une étape d'extraction du gaz spécifique du mélange recueilli en sortie de l'enceinte pendant cette dernière purge de l'enceinte

Le procédé peut comporter en outre après l'étape d'introduction du gaz de remplissage une succession d'étapes alternées de purge de l'enceinte avec du gaz de purge et d'étapes d'introduction du gaz de remplissage dans l'enceinte, ainsi que des étapes d'extraction du gaz spécifique du mélange recueilli en sortie de l'enceinte au moins lors de chacune desdites étapes de purge.

L'invention a également pour objet une installation pour la mise en oeuvre du procédé tel que défini ci-dessus, conforme à la revendication d'installation 17 ci-après annexée.

Selon l'invention, l'installation peut présenter l'une ou plusieurs des caractéristiques suivantes :
- la sortie d'évacuation du gaz spécifique extrait est reliée à la conduite d'alimentation en gaz de remplissage ;
- le dispositif d'extraction est un dispositif de séparation du gaz de purge et du gaz spécifique, et il comporte en outre une sortie d'évacuation du gaz de purge séparé reliée à la conduite d'alimentation en gaz de purge.

L'invention sera mieux comprise à la lecture de la description qui va suivre, donnée uniquement à titre d'exemple et faite en se référant à la figure unique qui est un schéma d'une installation adaptée pour la mise en oeuvre d'un procédé d'introduction d'un gaz de remplissage selon l'invention.

L'installation représentée sur le dessin comporte une enceinte 10, supposée ici être une enceinte de confinement dans laquelle sont placés des vitrages multiples en vue du remplissage des chambres délimitées entre les vitres de chaque vitrage par un gaz présentant par exemple des propriétés d'isolation thermique et/ou d'isolation acoustique, du krypton par exemple.

L'enceinte 10 comporte une première entrée 12 reliée à un réservoir de gaz de purge 14 sous pression par une conduite d'alimentation en gaz de purge 16. Le gaz de purge est supposé ici être du dioxyde de carbone, utilisé notamment pour son faible coût de production. La conduite d'alimentation 16 comporte successivement, depuis le réservoir de gaz de purge 14 jusqu'à l'entrée 12, un régulateur de pression 18 et une vanne d'entrée manuelle 20.

L'enceinte 10 comporte également une seconde entrée 22 de gaz de remplissage, reliée à un réservoir de gaz de remplissage 24 contenant du gaz spécifique sous pression par l'intermédiaire d'une conduite d'alimentation en gaz de remplissage 26. Le gaz spécifique est supposé ici être du krypton dont le coût de production est élevé. Cette conduite d'alimentation 26 comporte depuis le réservoir de gaz de remplissage 24 jusqu'à l'entrée 22 un régulateur de pression 27, une vanne d'arrêt pilotée 28, un régulateur de pression 30 et une vanne d'entrée manuelle 32.

L'enceinte 10 comporte en outre une sortie d'évacuation 34 reliée par une conduite d'évacuation 36 à un dispositif de séparation de gaz 38 adapté pour mettre en oeuvre une perméation sélective. Sur la conduite d'évacuation 36 est piquée une dérivation 40 formant une conduite de vidange, munie d'une vanne pilotée de vidange 42 à son extrémité ouverte sur le milieu ambiant. La conduite 36 comporte, entre ce piquage et le dispositif 38, une vanne pilotée d'isolement 43, un réservoir tampon 44, un compresseur 46 puis une vanne pilotée 47.

Le dispositif de séparation de gaz 38 comporte une enceinte 48, divisée en deux chambres 50,52 séparées par une membrane de perméation sélective 54. Cette dernière est adaptée pour séparer le gaz spécifique d'un mélange contenant du gaz de remplissage et du gaz de purge. Dans le cas présent, la membrane 54, de type polyimide, est sensiblement perméable au dioxyde de carbone et très peu imperméable au krypton. Le dioxyde de carbone a été choisi en fonction de cette membrane et de l'utilisation du krypton pour permettre une extraction de ce dernier du mélange qu'il forme avec le krypton nettement plus facile que si le krypton était mélangé à de l'air. En effet, ce type de membrane présente une très bonne perméabilité au dioxyde de carbone, nettement supérieure à sa perméabilité à l'air.

Une entrée de la chambre 50 est reliée à la conduite d'évacuation 36, alors que la sortie d'évacuation de refus 50A de cette chambre est reliée par une conduite de recyclage 56 à la conduite d'alimentation en gaz de remplissage 26, entre la vanne d'arrêt 28 et le régulateur 30 de celle-ci. La conduite de recyclage 56 comporte, depuis le dispositif de séparation des gaz 38, une vanne pilotée 57, un réservoir tampon 58 et une vanne d'arrêt pilotée 60.

La chambre 52 du dispositif de séparation des gaz 38 est munie d'une sortie d'évacuation de perméat 52A pour le gaz de purge à recycler, reliée à la conduite d'alimentation en gaz de purge 16, en amont du régulateur de pression 18, par une conduite de recyclage 62 en gaz de purge recyclé, munie d'un compresseur 64.

La conduite d'évacuation 36 au niveau de la sortie d'évacuation 34 et le réservoir tampon 58 comportent chacun un piquage ou dérivation, noté respectivement 66 et 68, relié à l'entrée d'une chambre formant analyseur de gaz en continu, notée respectivement 70 et 72. Les sorties d'évacuation des analyseurs de gaz sont reliées par une conduite commune d'évacuation des gaz analysés 74 au réservoir tampon 44.

Une ligne de dérivation 76 munie d'une vanne pilotée 78 relie le réservoir tampon 58 à la conduite d'évacuation des gaz analysés 74.

Les sorties de mesure des analyseurs de gaz 70,72 sont reliées à un système de contrôle non représenté permettant de piloter les vannes pilotées mentionnées ci-dessus.

Chacun des dispositifs nécessitant une source d'énergie, tels que les compresseurs 46 et 64, les vannes d'arrêt pilotées, les analyseurs 70 et 72 ainsi que le système de contrôle, sont reliés à des sources d'alimentation appropriées non représentées.

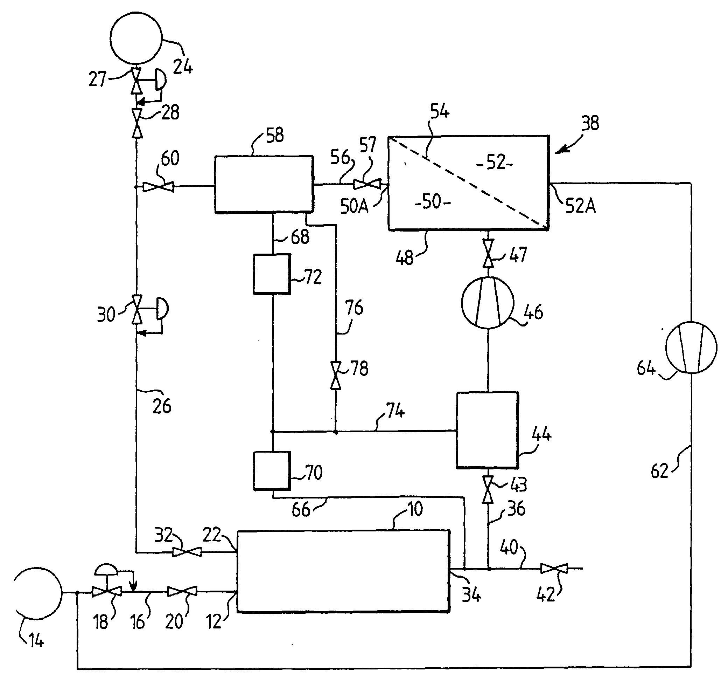

Lors de l'utilisation de l'installation par mise en oeuvre du procédé selon l'invention, après introduction des vitrages multiples à l'intérieur de l'enceinte 10 et fermeture de celle-ci, l'enceinte contient de l'air ambiant formant un gaz d'attente. Toutes les vannes de l'installation représentées sur la figure 1 étant fermées à l'exception de la vanne d'entrée 20 et de la vanne de vidange 42, les compresseurs 46 et 64 étant arrêtés, du gaz de purge circule depuis le réservoir de purge 14 jusqu'à la vanne de vidange 42 sous l'effet de la surpression régnant dans le réservoir 14, provoquant ainsi un balayage de l'enceinte 10. Après une période de temps déterminée, l'enceinte 10 contient essentiellement du gaz de purge, l'air ambiant ayant été évacué avec une partie du gaz de purge dans l'atmosphère à partir de la vanne de vidange ouverte 42.

Après achèvement de cette étape de purge initiale par remplissage de l'enceinte 10 avec du gaz de purge de faible coût de production et non polluant, la vanne 20 est fermée et la vanne 32 est ouverte afin de procéder à l'étape de remplissage de l'enceinte 10 avec du gaz spécifique.

Au cours des étapes de purge et de remplissage décrites ci-dessus, l'analyseur 70 détecte la teneur en gaz spécifique à la sortie de l'enceinte 10. Au début, la vanne 43 est fermée et la vanne 42 est ouverte, ce qui a pour effet de mettre à l'air le gaz sortant de l'enceinte 10. Lorsque l'analyseur 70 détecte la présence de gaz spécifique dans le mélange sortant de l'enceinte 10, le système de contrôle ouvre la vanne 43 et ferme simultanément la vanne 42 de façon à envoyer le gaz vers le dispositif d'extraction 38.

A la fin de l'étape de remplissage de l'enceinte 10 avec le gaz spécifique, qui peut notamment être prolongée jusqu'à ce que l'analyseur 70 détecte une teneur Y34 en gaz spécifique dans la conduite 34 supérieure à une teneur de référence Y34_{ref}, les vannes 32 et 43 sont fermées et les vitrages remplis peuvent être scellés.

Dans le cas où l'enceinte contient encore une quantité notable de gaz spécifique dans les volumes morts extérieurs aux vitrages, une étape de purge finale au moyen de gaz de purge est conduite par ouverture des vannes 20 et 43. Les vannes 32 et 42 sont maintenues fermées, de façon à envoyer tout le mélange évacué de l'enceinte 10 vers le dispositif d'extraction 38, jusqu'à ce que l'essentiel du gaz spécifique contenu dans l'enceinte 10 ait été chassé par le gaz de purge entrant vers le dispositif d'extraction 38.

A la fin de l'enchaînement des étapes décrites ci-dessus, l'enceinte 10 peut être ouverte à l'air ambiant pour procéder au remplacement des vitrages qu'elle contient par d'autres vitrages prêts à être remplis.

Ainsi, dans cette dernière étape, il y a remplacement du gaz spécifique formant un gaz d'attente par de l'air formant un gaz de remplissage, par mise en oeuvre d'une étape intermédiaire consistant en une purge par du gaz de purge.

L'introduction et l'évacuation des gaz lors des étapes de purge initiale, remplissage et purge finale décrites ci-dessus sont effectuées selon des procédés connus. Ces procédés peuvent notamment rechercher soit la réalisation de mouvements convectifs importants, soit au contraire la création d'un écoulement piston à l'intérieur de l'enceinte afin d'assurer le balayage complet de toute l'enceinte par le gaz introduit. Ces procédés peuvent également tirer avantage des différences de densité entre les gaz d'attente, de remplissage et de purge pour améliorer la qualité des écoulements pistons. Dans ce cas, l'introduction ou le soutirage des différents gaz sont effectués par divers orifices situés de préférence en un point bas pour les gaz relativement lourds, et en un point haut pour les gaz relativement légers.

Le dispositif de pilotage de vannes associé à un système de contrôle automatique pilote en outre les opérations décrites ci-dessous. Ce système reçoit des informations qui lui sont transmises par les analyseurs 70 et 72, et des indications sur les quantités de gaz contenues dans les réservoirs 58 et 44, ces indications pouvant être transmises par des capteurs de pression ou des indicateurs de niveau dans le cas de réservoirs de stockage à volume variable.

Lorsque le réservoir 44 est plein, ce qui correspond à la détection d'une indication de niveau haut dans le cas par exemple d'un réservoir volumétrique à pression constante, le système de contrôle déclenche l'étape d'extraction en mettant en marche les compresseurs 46 et 64 et en ouvrant les vannes 47 et 57.

Le mélange de gaz contenu dans le réservoir 44 pénètre dans la chambre 50, et, sous l'effet de la pression résultant du compresseur 46, une partie importante du gaz de purge et une faible partie du gaz spécifique traversent la membrane 54 vers la chambre 52, alors que la majeure partie du gaz spécifique ainsi séparée et le reste du gaz de purge sont évacués par la conduite de recyclage 56 vers le réservoir tampon 58. Parallèlement, sous l'effet du compresseur 64, le gaz issu de la chambre 52, essentiellement constitué de gaz de purge, est envoyé par la conduite de recyclage 62 vers la conduite d'alimentation en gaz de purge 16.

Le système de contrôle effectue un test pour vérifier deux conditions simultanément :
(i) la teneur en gaz spécifique dans le gaz contenu dans le réservoir tampon 58 est-elle supérieure à la teneur de référence Y58_{ref} en gaz spécifique, cette dernière étant supérieure à la teneur Y10_{ref} et correspondant à une pureté minimale imposée du gaz spécifique présent dans le réservoir tampon 58 ? et
(ii) la pression du gaz dans le réservoir tampon 58 est-elle supérieure à une pression de référence correspondant à la pression minimale permettant l'utilisation satisfaisante du gaz pour le remplissage de l'enceinte 10 ?

Si les deux conditions ci-dessus sont respectées, le système de contrôle pilote l'ouverture de la vanne 60 et ferme ou maintient fermée la vanne 28, permettant ainsi l'utilisation préférentielle du gaz spécifique recyclé issu du réservoir tampon 58 pour le remplissage de l'enceinte 10.

Par contre, si une des deux conditions n'est pas respectée, c'est-à-dire que la pureté ou la pression du gaz spécifique contenu dans le réservoir tampon est insuffisante, le système de contrôle ferme ou maintient fermée la vanne 60 et provoque l'ouverture de la vanne 28. Ainsi, dans les deux cas, la conduite d'alimentation 26 de l'enceinte 10 est alimentée en gaz spécifique depuis le réservoir 24 ou le réservoir tampon 58.

Dans le cas où la première condition citée ci-dessus n'est pas respectée, c'est-à-dire que la teneur en gaz spécifique dans le réservoir tampon 58 est insuffisante, le système de contrôle ouvre la vanne 78, permettant l'évacuation progressive du gaz contenu dans le réservoir tampon 58 vers le réservoir 44 par le parcours défini par le piquage 76 et la conduite d'évacuation 74. Lorsque la teneur en gaz spécifique dans le réservoir tampon 58 est suffisante ou si la pression dans le réservoir tampon 58 descend jusqu'à un seuil fixé à un niveau supérieur à la pression atmosphérique, le système de contrôle ferme la vanne 78.

Dans ces conditions, l'enceinte 10 peut être remplie pratiquement totalement de gaz spécifique si on le souhaite, sans qu'une quantité excédentaire importante de gaz spécifique ne soit extraite du réservoir de stockage 24, et sans perte importante de gaz spécifique. En effet, le gaz spécifique évacué de l'enceinte 10 avec le gaz de purge est essentiellement recyclé et est recueilli dans le réservoir tampon 58.

Suivant des modes particuliers de réalisation de l'installation, le compresseur 64 est remplacé par un dispositif, une pompe à vide par exemple, permettant également d'amener la pression dans la chambre 52 au-dessous de la pression atmosphérique afin d'améliorer les performances du dispositif d'extraction 38.

Par ailleurs, en aval de la vanne 42, peut être disposé un dispositif d'extraction du gaz de purge afin de séparer celui-ci du mélange recueilli en sortie de l'enceinte lors de l'étape de purge initiale. Ce gaz de purge peut être recyclé.

De même, la conduite de recyclage 62 peut être supprimée, et le gaz de purge sortant du dispositif d'extraction est ainsi rejeté directement dans l'atmosphère. Son rejet n'a qu'une faible incidence sur le coût de fonctionnement de l'installation, puisque le coût du gaz de purge (dioxyde de carbone) est faible par rapport à celui du gaz spécifique.

De même, le dispositif de séparation des gaz 38 peut être remplacé par un dispositif de distillation sélective, ou un dispositif de séparation par simple refroidissement, ou un dispositif d'adsorption sélective, notamment du type PSA (Pressure Swing Adsorption ou adsorption à variation de pression) ou VSA (Vacuum Swing Adsorption ou adsorption à variation de pression avec mise sous vide) ou encore un dispositif d'absorption sélective. Dans ce dernier cas, par contre, le gaz spécifique est extrait du mélange recueilli en sortie de l'enceinte 10 et le gaz de purge n'est pas récupéré mais est absorbé. Dans les autres cas, le gaz spécifique est extrait par mise en oeuvre d'un procédé de séparation et le gaz de purge est également récupéré.

Quel que soit le type de dispositif d'extraction utilisé, on choisit le gaz de purge de telle sorte que le gaz spécifique soit facilement extractible du mélange formé de ces deux gaz. Ce choix est donc effectué en fonction du gaz spécifique à extraire et du dispositif d'extraction ou séparation utilisé.

Ainsi par exemple, si l'étape d'extraction est une étape de distillation sélective ou de séparation par simple refroidissement, alors le gaz de purge et le gaz spécifique ont des points d'ébullition plus éloignés l'un de l'autre que le gaz spécifique et le mélange qui aurait été formé par le gaz d'attente et le gaz de remplissage.

Si l'étape d'extraction est une étape d'adsorption sélective, alors l'adsorbant a une sélectivité vis-à-vis des deux gaz supérieure à celle qu'il présente vis-à-vis du gaz spécifique et du mélange qui aurait été formé par le gaz d'attente et le gaz de remplissage.

Si l'étape d'extraction est une perméation sélective alors la membrane de perméation a une sélectivité vis-à-vis des deux gaz supérieure à celle qu'elle présente vis-à-vis du gaz spécifique et du mélange qui aurait été formé par le gaz d'attente et le gaz de remplissage.

Si l'étape d'extraction est une étape d'absorption sélective, alors l'absorbant a une sélectivité vis-à-vis des deux gaz supérieure à celle qu'il présente vis-à-vis du gaz spécifique et du mélange qui aurait été formé par le gaz d'attente et le gaz de remplissage.

Par ailleurs, l'installation décrite ici est utilisée pour le remplissage de l'espace entre les vitres de vitrages multiples, ces vitrages multiples étant reçus dans une enceinte 10. Il est également envisageable de relier directement à chaque vitrage les conduites d'alimentation 16 et 26 et la conduite d'évacuation 36, l'enceinte étant alors délimitée par les vitrages eux-mêmes.

L'installation peut aussi servir à remplir avec des gaz de faible conductivité thermique des panneaux isolants servant à l'isolation thermique.

Dans la description effectuée ci-dessus, le gaz de remplissage est le gaz spécifique lui-même, mais il est également envisageable que le gaz de remplissage soit constitué de plusieurs gaz dont le gaz spécifique, introduits soit en mélange à teneur essentiellement constante soit successivement à partir de plusieurs réservoirs de stockage 24 en vue d'optimiser l'étape de remplissage de l'enceinte. Le gaz de purge est alors choisi de façon à ce que le gaz spécifique soit facilement extractible par rapport au gaz de purge et le gaz recyclé par la conduite 56 peut contenir une part importante de gaz différents du gaz de purge.

Par ailleurs, à titre d'exemple, l'invention peut également être mise en oeuvre au moyen d'une installation similaire à celle décrite ci-dessus pour la production ou le conditionnement de produits alimentaires ou pharmaceutiques, l'enceinte 10 servant dans ce cas à maintenir lesdits produits sous atmosphère contrôlée. L'enceinte 10 peut notamment contenir des emballages pour la distribution et la commercialisation desdits produits ou être elle-même un emballage du type ci-dessus. Le gaz spécifique utilisé peut notamment être de l'argon ou un mélange de gaz rares ayant des propriétés spécifiques vis-à-vis des réactions enzymatiques, le gaz de purge pouvant être préférentiellement du dioxyde de carbone, compte tenu de son faible coût de production.

De même, l'enceinte peut contenir des ampoules ou être elle même une ampoule de lampe électrique ou électronique destinée à être remplie par du gaz. L'enceinte peut également être un équipement servant à la fabrication de composants électroniques sous atmosphère contrôlée, ou un four, un four de traitement thermique par exemple.

Par ailleurs, dans le cas du remplissage de vitrages multiples par exemple, il peut être utilisé une chambre en communication libre avec le milieu ambiant dans sa partie supérieure et dont les entrées en gaz de remplissage et de purge et la sortie de recueil du mélange contenu à l'intérieur sont disposées dans la partie inférieure de celle-ci définissant ainsi une enceinte utile.

La chambre contenant initialement de l'air ambiant, ainsi que les vitrages multiples à remplir disposés dans la partie inférieure de la chambre, est purgée complètement avec du dioxyde de carbone introduit par le bas de la chambre. Le dioxyde de carbone, ayant une densité supérieure à celle de l'air, évacue l'air par le haut de la chambre et jusqu'à remplir celle-ci totalement ou partiellement.

Du gaz de remplissage, par exemple du krypton, est alors introduit par le bas de la chambre. Celui-ci ayant une densité supérieure à celle du dioxyde de carbone, reste au-dessous du dioxyde de carbone et chasse en partie celui-ci par l'ouverture supérieure de la chambre. Du gaz de remplissage est introduit dans l'enceinte, et la partie supérieure de la chambre reste ainsi emplie de dioxyde de carbone. Les vitrages multiples se trouvant dans le volume inférieur de la chambre empli de krypton sont alors scellés. A cet instant, l'enceinte est pleine de krypton.

Avant de sortir les vitrages terminés de la chambre, une partie du gaz contenu dans celle-ci est soutirée par le bas. Ainsi, au début de cette étape, essentiellement du krypton est soutiré de la chambre. Le soutirage est poursuivi jusqu'à ce tout le krypton contenu dans l'enceinte formée par la partie basse de la chambre soit extrait. Le mélange soutiré, à forte concentration en krypton, est traité pour en extraire le krypton. Grâce aux densités différentes des gaz, la chambre contient alors dans sa partie inférieure du dioxyde de carbone et dans sa partie supérieure de l'air. Cette étape de mise en oeuvre conduit ainsi à une purge de l'enceinte constituée par le volume inférieur de la chambre, avec le dioxyde de carbone stocké dans la partie supérieure de la chambre, en vue de récupérer le krypton contenu précédemment dans le volume inférieur de la chambre. Les vitrages scellés sont retirés de la chambre par l'ouverture supérieure de celle-ci ou par des sas appropriés et de nouveaux vitrages à remplir sont introduits.

Afin de procéder à leur remplissage, du krypton est à nouveau introduit par le bas de la chambre repoussant le dioxyde de carbone dans la partie supérieure de la chambre. Les vitrages sont ensuite scellés et une nouvelle étape de purge du volume inférieur de la chambre par le dioxyde de carbone stocké dans la partie supérieure est mise en oeuvre avant de sortir les vitrages terminés. Une succession d'étapes alternées de purge de la chambre avec du dioxyde de carbone, d'introduction du krypton pour le remplissage du volume inférieur de celle-ci sont alors réalisées afin de procéder au remplissage en série de nouveaux jeux de vitrages. Des étapes d'extraction du krypton du mélange obtenu en sortie de la chambre sont mises en oeuvre lors de chaque étape de purge du krypton par le dioxyde de carbone.

Il est à noter que l'épaisseur du tampon de dioxyde de carbone utilisé peut être faible et notamment inférieure à la hauteur de l'enceinte utile pour le remplissage des vitrages. Dans ces conditions, lors des phases de purge, l'enceinte formée par la partie inférieure de la chambre n'est pas complètement emplie de dioxyde de carbone et la partie haute de celle-ci est emplie d'air ambiant. Le procédé selon l'invention s'applique cependant puisque le gaz soutiré dans la partie inférieure de l'enceinte n'est pas en contact avec l'air ambiant. La circulation dans l'enceinte du tampon de dioxyde de carbone crée une purge de celle-ci.

Selon une variante de ce mode de mise en oeuvre, le dioxyde de carbone servant à la purge peut être stocké dans un réservoir auxiliaire relié à une sortie d'évacuation disposée dans la partie supérieure de la chambre, plutôt que d'être stocké directement dans la moitié supérieure de la chambre. En vue du remplissage des vitrages multiples, la chambre est alors emplie totalement avec du krypton et dans ce cas elle constitue l'enceinte utile.

De même, l'invention est applicable au recyclage de l'argon dans les procédés de brassage de l'acier à l'argon (ou avec un mélange d'argon et d'azote), l'enceinte étant constituée par le convertisseur ou la poche surmonté par une hotte de récupération des gaz, et le gaz de purge étant préférentiellement du dioxyde de carbone.

L'invention peut également être mise en oeuvre pour l'inertage puis la mise à l'air de réacteurs, de réservoirs ou de conduites contenant des produits chimiques et notamment des gaz spécifiques résultant de réactions chimiques. Dans le cas où il est souhaitable de récupérer lesdits produits compte tenu de leurs coûts ou de leurs impacts sur l'atmosphère, l'inertage est effectué au moyen d'un gaz de purge choisi pour faciliter l'extraction et la récupération des gaz spécifiques du mélange qu'ils forment avec le gaz de purge.

L'installation décrite en regard du dessin annexé utilise du krypton comme gaz spécifique et du dioxyde de carbone comme gaz de purge, mais il est bien entendu que peuvent être utilisés d'autres gaz spécifiques, notamment du néon, de l'argon, du xénon, de l'hexafluorure de soufre ou tout autre composé halogéné et des hydrocarbures, et que d'autres gaz de purge peuvent être utilisés en remplacement du dioxyde de carbone, notamment de l'argon, de l'hélium ou de l'hydrogène.

L'utilisation de l'hélium comme gaz de purge offre en outre la possibilité de détection de fuites aisée dans le cas de la mise en oeuvre du gaz spécifique dans un vitrage multiple, pour le contrôle qualité de la production, par spectrométrie de masse par exemple.

On conçoit par ailleurs qu'une telle installation mettant en oeuvre le procédé selon l'invention peut être particulièrement intéressante dans le cas de procédés mettant en oeuvre des gaz spécifiques dangereux dont la libération dans l'atmosphère est nuisible. En effet, le gaz spécifique rejeté de l'enceinte par la sortie d'évacuation 34 est essentiellement récupéré dans le réservoir tampon 58 après traitement, et seule une faible fraction de celui-ci sortant du dispositif d'extraction 38 par la sortie 52A n'est pas totalement recyclée.

Il est à noter que le gaz de purge peut avoir des propriétés complémentaires vis-à-vis du procédé de mise en oeuvre du gaz spécifique. En particulier, le gaz de purge peut être choisi pour améliorer en outre la sensibilité des analyses du gaz spécifique, ou pour améliorer l'efficacité des opérations de purge et/ou de remplissage grâce à sa masse molaire différente des autres gaz utilisés, ou encore présenter des propriétés avantageuses en matière de conductivité thermique, viscosité, masse molaire, réactivité thermique, ou facilité de détection par exemple.

Un avantage de l'invention est de permettre l'amélioration de la productivité de la mise en oeuvre du gaz spécifique grâce à l'augmentation du débit de remplissage, tout en améliorant aussi les performances du remplissage (taux de remplissage final et perte en gaz spécifique).

## Revendications

1. Procédé d'introduction d'un gaz de remplissage dans une enceinte (10) contenant initialement un gaz d'attente, ce procédé comportant une étape d'introduction du gaz de remplissage dans l'enceinte (10) ainsi qu'une étape d'extraction d'un gaz spécifique contenu initialement dans le gaz de remplissage ou le gaz d'attente à partir d'un mélange recueilli en sortie de l'enceinte (10), et éventuellement une étape de recyclage de ce gaz spécifique extrait, caractérisé en ce qu'avant l'étape d'introduction du gaz de remplissage, l'enceinte est purgée au moyen d'un gaz de purge différent des gaz de remplissage et d'attente.

2. Procédé selon la revendication 1, caractérisé en ce que le gaz de purge est choisi de telle sorte que ledit gaz spécifique soit plus facilement extractible du mélange qu'il forme avec le gaz de purge que du mélange qui aurait été formé par les gaz d'attente et de remplissage en l'absence d'utilisation dudit gaz de purge, ladite facilité d'extraction se rapportant à un type déterminé de procédé d'extraction.

3. Procédé selon la revendication 1 ou 2, caractérisé en ce que ledit mélange est recueilli pendant l'étape d'introduction du gaz de remplissage, ledit gaz spécifique extrait étant contenu initialement dans le gaz de remplissage.

4. Procédé selon la revendication 3, caractérisé en ce qu'il comporte en outre après l'étape d'introduction du gaz de remplissage une succession d'étapes alternées de purge de l'enceinte (10) avec du gaz de purge et d'étapes d'introduction du gaz de remplissage dans l'enceinte, ainsi que des étapes d'extraction du gaz spécifique du mélange recueilli en sortie de l'enceinte (10) au moins lors de chacune desdites étapes de purge.

5. Procédé selon la revendication 1 ou 2, caractérisé en ce que ledit mélange est recueilli au moins pendant l'étape de purge de l'enceinte (10), ledit gaz spécifique étant contenu dans le gaz d'attente.

6. Procédé selon l'une quelconque des revendications 1 à 5, caractérisé en ce que l'introduction du gaz de remplissage est poursuivie jusqu'au remplissage pratiquement total de ladite enceinte (10) avec le gaz de remplissage.

7. Procédé selon l'une quelconque des revendications précédentes, caractérisé en ce que le gaz de purge est extrait des mélanges recueillis en sortie de l'enceinte (10) et éventuellement recyclé.

8. Procédé selon la revendication 7, caractérisé en ce que le gaz de purge est récupéré et éventuellement recyclé lors de l'extraction du gaz spécifique.

9. Procédé selon l'une quelconque des revendications précédentes, caractérisé en ce que l'étape d'extraction est une étape de distillation sélective ou de séparation par simple refroidissement et en ce que le gaz de purge et le gaz spécifique ont des points d'ébullition plus éloignés l'un de l'autre que le gaz spécifique et le mélange qui aurait été formé par le gaz d'attente et le gaz de remplissage.

10. Procédé selon l'une quelconque des revendications 1 à 8, caractérisé en ce que l'étape d'extraction est une étape d'adsorption sélective, au moyen d'un adsorbant ayant une sélectivité vis-à-vis des deux gaz supérieure à celle qu'il présente vis-à-vis du gaz spécifique et du mélange qui aurait été formé par le gaz d'attente et le gaz de remplissage.

11. Procédé selon l'une quelconque des revendications 1 à 8, caractérisé en ce que l'étape d'extraction est une perméation sélective qui met en oeuvre une membrane de perméation ayant une sélectivité vis-à-vis des deux gaz supérieure à celle qu'elle présente vis-à-vis du gaz spécifique et du mélange qui aurait été formé par le gaz d'attente et le gaz de remplissage.

12. Procédé selon l'une quelconque des revendications 1 à 8, caractérisé en ce que l'étape d'extraction est une étape d'absorption sélective, au moyen d'un absorbant ayant une sélectivité vis-à-vis des deux gaz supérieure à celle qu'il présente vis-à-vis du gaz spécifique et du mélange qui aurait été formé par le gaz d'attente et le gaz de remplissage.

13. Procédé selon l'une quelconque des revendications précédentes, caractérisé en ce que le gaz spécifique contient de l'argon, ou du néon, ou du krypton, ou du xénon, ou de l'hexafluorure de soufre, et en ce que le gaz de purge contient de l'argon, ou du dioxyde de carbone, ou de l'hélium, ou de l'hydrogène.

14. Procédé selon l'une quelconque des revendications précédentes, appliqué au remplissage de l'interparoi de vitrages multiples avec ledit gaz spécifique.

15. Procédé de mise en oeuvre d'un gaz spécifique dans une enceinte contenant initialement un gaz d'attente, ce procédé comportant une étape d'introduction d'un gaz de remplissage contenant du gaz spécifique dans l'enceinte (10), caractérisé en ce qu'avant l'étape d'introduction du gaz de remplissage, l'enceinte (10) est purgée au moyen d'un gaz de purge différent des gaz de remplissage et d'attente, en ce qu'il est prévu une étape d'extraction du gaz spécifique du mélange recueilli en sortie de l'enceinte pendant l'étape d'introduction du gaz de remplissage, en ce qu'après l'étape d'introduction du gaz de remplissage, l'enceinte est à nouveau purgée au moyen d'un gaz de purge différent des gaz de remplissage et d'attente, avant d'introduire à nouveau dans l'enceinte du gaz d'attente, et en ce qu'il est prévu une étape d'extraction du gaz spécifique du mélange recueilli en sortie de l'enceinte (10) au moins pendant cette dernière purge de l'enceinte.

16. Procédé selon la revendication 15, caractérisé en ce qu'il comporte en outre après l'étape d'introduction du gaz de remplissage une succession d'étapes alternées de purge de l'enceinte (10) avec du gaz de purge et d'étapes d'introduction du gaz de remplissage dans l'enceinte, ainsi que des étapes d'extraction du gaz spécifique du mélange recueilli en sortie de l'enceinte (10) au moins lors de chacune desdites étapes de purge.

17. Installation pour la mise en oeuvre du procédé selon l'une quelconque des revendications précédentes, comportant une enceinte (10) de mise en oeuvre d'un gaz de remplissage, enceinte qui est initialement remplie d'un gaz d'attente et qui comporte une entrée (22) reliée à une conduite d'alimentation en gaz de remplissage (26) ainsi qu'une sortie d'évacuation (34) reliée à un dispositif (38) d'extraction d'un gaz spécifique contenu initialement dans le gaz de remplissage ou dans le gaz d'attente, ce dispositif d'extraction étant muni d'une sortie (50A) d'évacuation du gaz spécifique extrait,
caractérisée en ce que l'enceinte comporte une autre entrée (12) reliée à une conduite (16) d'alimentation en un gaz de purge.

18. Installation selon la revendication 17, caractérisée en ce que la sortie d'évacuation (50A) du gaz spécifique extrait est reliée à la conduite d'alimentation en gaz de remplissage (26).

19. Installation selon la revendication 17 ou 18, caractérisée en ce que le dispositif d'extraction (38) est un dispositif de séparation du gaz de purge et du gaz spécifique, et en ce qu'il comporte en outre une sortie (52A) d'évacuation du gaz de purge séparé reliée à la conduite d'alimentation en gaz de purge (16).

## Patentansprüche

1. Verfahren zur Einführung eines Füllgases in einen Raum (10), der anfangs ein Wartegas enthält, wobei man bei dem Verfahren das Füllgas in den Raum (10) einführt sowie ein Sondergas, das anfangs in dem Füllgas oder in dem Wartegas enthalten ist, aus einem am Ausgang des Raumes (10) gesammelten Gemisch abzieht und eventuell dieses abgezogene Sondergas zurückführt, dadurch gekennzeichnet, daß der Raum vor der Einführung des Füllgases mittels eines Spülgases, das sich von dem Füll- und Wartegas unterscheidet, gespült wird.

2. Verfahren nach Anspruch 1, dadurch gekennzeichnet, daß das Spülgas so ausgewählt wird, daß sich das Sondergas leichter aus dem Gemisch abziehen läßt, das es mit dem Spülgas bildet, als aus dem Gemisch, das durch das Warte- und Füllgas gebildet worden wäre, wenn kein Spülgas verwendet worden wäre, wobei sich die leichte Abziehbarkeit auf eine bestimmte Art des Abziehens bezieht.

3. Verfahren nach Anspruch 1 oder 2, dadurch gekennzeichnet, daß das Gemisch während des Einführens des Füllgases gesammelt wird, wobei das abgezogene Sondergas anfangs in dem Füllgas enthalten ist.

4. Verfahren nach Anspruch 3, dadurch gekennzeichnet, daß man dabei des weiteren nach dem Einführen des Füllgases aufeinanderfolgend abwechselnd den Raum (10) mit dem Spülgas spült und das Füllgas in den Raum einführt sowie das Sondergas aus dem am Ausgang des Raumes (10) zumindest bei jedem Spülvorgang gesammelten Gemisch abzieht.

5. Verfahren nach Anspruch 1 oder 2, dadurch gekennzeichnet, daß das Gemisch zumindest während des Spülens des Raumes (10) gesammelt wird, wobei das Sondergas in dem Wartegas enthalten ist.

6. Verfahren nach einem der vorhergehenden Ansprüche 1 bis 5, dadurch gekennzeichnet, daß so lange Füllgas eingeführt wird, bis praktisch der gesamte Raum (10) mit dem Füllgas gefüllt ist.

7. Verfahren nach einem der vorhergehenden Ansprüche, dadurch gekennzeichnet, daß das Spülgas aus den am Ausgang des Raumes (10) gesammelten Gemischen abgezogen und eventuell zurückgeführt wird.

8. Verfahren nach Anspruch 7, dadurch gekennzeichnet, daß das Spülgas beim Abziehen des Sondergases wiedergewonnen und eventuell zurückgeführt wird.

9. Verfahren nach einem der vorhergehenden Ansprüche, dadurch gekennzeichnet, daß es sich bei dem Abziehen um selektive Destillierung oder Trennung durch einfaches Abkühlen handelt und daß das Spülgas und das Sondergas Siedepunkte aufweisen, die weiter auseinanderliegen als das Sondergas und das Gemisch, das durch das Wartegas und das Füllgas gebildet worden wäre.

10. Verfahren nach einem der vorhergehenden Ansprüche 1 bis 8, dadurch gekennzeichnet, daß es sich bei dem Abziehen um eine selektive Adsorption mittels eines Adsorptionsmittels handelt, das für die beiden Gase eine größere Selektivität als für das Sondergas und das Gemisch, das durch das Wartegas und das Füllgas gebildet worden wäre, aufweist.

11. Verfahren nach einem der vorhergehenden Ansprüche 1 bis 8, dadurch gekennzeichnet, daß es sich bei dem Abziehen um eine selektive Permeation handelt, bei der eine Permeationsmembran eingesetzt wird, die für die beiden Gase eine größere Selektivität als für das Sondergas und das Gemisch, das durch das Wartegas und das Füllgas gebildet worden wäre, aufweist.

12. Verfahren nach einem der vorhergehenden Ansprüche 1 bis 8, dadurch gekennzeichnet, daß es sich bei dem Abziehen um eine selektive Absorption mittels eines Absorptionsmittels handelt, das für die beiden Gase eine größere Selektivität als für das Sondergas und das Gemisch, das durch das Wartegas und das Füllgas gebildet worden wäre, aufweist.

13. Verfahren nach einem der vorhergehenden Ansprüche, dadurch gekennzeichnet, daß das Sondergas Argon, Neon, Krypton oder Xenon oder Schwefelhexafluorid enthält und daß das Spülgas Argon, Kohlendioxid, Helium oder Wasserstoff enthält.

14. Verfahren nach einem der vorhergehenden Ansprüche, das auf das Füllen des Zwischenraums von Mehrfachverglasungen mit dem Sondergas angewandt wird.

15. Verfahren zum Einsatz eines Sondergases in einem Raum, der anfangs ein Wartegas enthält, wobei man bei diesem Verfahren ein Füllgas, das das Sondergas enthält, in den Raum (10) einführt, dadurch gekennzeichnet, daß der Raum (10) vor dem Einführen des Füllgases mittels eines Spülgases, das sich von dem Füll- und Wartegas unterscheidet, gespült wird, daß ein Abziehen des Sondergases aus dem während des Einführens des Füllgases am Ausgang des Raumes gesammelten Gemisch vorgesehen ist, daß der Raum nach dem Einführen des Füllgases mittels eines Spülgases, das sich von dem Füll- und dem Wartegas unterscheidet, erneut gespült wird, bevor in den Raum erneut das Wartegas eingeführt wird, und daß ein Abziehen des Sondergases aus dem zumindest während dieser letzten Spülung des Raumes am Ausgang des Raumes (10) gesammelten Gemisch vorgesehen ist.

16. Verfahren nach Anspruch 15, dadurch gekennzeichnet, daß man dabei des weiteren nach dem Einführen des Füllgases aufeinanderfolgend abwechselnd den Raum (10) mit dem Spülgas spült und das Füllgas in den Raum einführt sowie das Sondergas aus dem zumindest bei jedem der Spülvorgänge am Ausgang des Raumes (10) gesammelten Gemisch abzieht.

17. Einrichtung zur Durchführung des Verfahrens nach einem der vorhergehenden Ansprüche, mit einem Raum (10) zum Einsatz eines Füllgases, wobei der Raum anfangs mit einem Wartegas gefüllt ist und einen mit einer Füllgasversorgungsleitung (26) verbundenen Eingang (22) sowie einen mit einer Vorrichtung (38) zum Abziehen eines Sondergases, das anfangs in dem Füllgas oder in dem Wartegas enthalten ist, verbundenen Evakuierungsausgang (34) aufweist, wobei diese Abziehvorrichtung mit einem Ausgang (50A) zur Evakuierung des abgezogenen Sondergases versehen ist,
dadurch gekennzeichnet, daß der Raum einen anderen, mit einer Leitung (16) zur Zuführung eines Spülgases verbundenen Eingang (12) aufweist.

18. Einrichtung nach Anspruch 17, dadurch gekennzeichnet, daß der Ausgang (50A) zur Evakuierung des abgezogenen Sondergases mit der Füllgasversorgungsleitung (26) verbunden ist.

19. Einrichtung nach Anspruch 17 oder 18, dadurch gekennzeichnet, daß es sich bei der Abziehvorrichtung (38) um eine Vorrichtung zur Trennung des Spülgases und des Sondergases handelt, und daß sie des weiteren einen Ausgang (52A) zur Evakuierung des getrennten Spülgases aufweist, der mit der Spülgasversorgungsleitung (16) verbunden ist.

## Claims

1. Process for introducing a filling gas into an enclosure (10) initially containing a holding gas, this process including a step of introducing the filling gas into the enclosure (10) as well as a step of extracting a specific gas initially contained in the filling gas or the holding gas from a mixture collected at the outlet of the enclosure (10), and possibly a step of recycling this extracted specific gas, characterized in that before the step of introducing the filling gas, the enclosure is purged by means of a purging gas which differs from the fill and holding gases.

2. Process according to Claim 1, characterized in that the purging gas is chosen such that the said specific gas is more easily extractable from the mixture which it forms with the purging gas than from the mixture which would have been formed by the holding and filling gases were the said purging gas not used, the said ease of extraction relating to a specified type of extraction process.

3. Process according to Claim 1 or 2, characterized in that the said mixture is collected during the step of introducing the filling gas, the said extracted specific gas being contained initially in the filling gas.

4. Process according to Claim 3, characterized in that it furthermore includes, after the step of introducing the filling gas, a succession of alternate steps of purging the enclosure (10) with the purging gas and of steps of introducing the filling gas into the enclosure, as well as steps of extracting the specific gas from the mixture collected at the outlet of the enclosure (10) at least during each of the said purge steps.

5. Process according to Claim 1 or 2, characterized in that the said mixture is collected at least during the step of purging the enclosure (10), the said specific gas being contained in the holding gas.

6. Process according to any one of Claims 1 to 5, characterized in that the introduction of the filling gas is continued until the said enclosure (10) is almost totally filled with the filling gas.

7. Process according to any one of the preceding claims, characterized in that the purging gas is extracted from the mixtures collected at the outlet of the enclosure (10) and is possibly recycled.

8. Process according to Claim 7, characterized in that the purging gas is recovered and possibly recycled during extraction of the specific gas.

9. Process according to any one of the preceding claims, characterized in that the extraction step is a step of selective distillation or of separation by simple cooling and in that the purging gas and the specific gas have boiling points which are further apart than the specific gas and the mixture which would have been formed by the holding gas and the filling gas.

10. Process according to any one of Claims 1 to 8, characterized in that the extraction step is a step of selective adsorption, by means of an adsorbent having a selectivity in relation to the two gases which is greater than that which it exhibits in relation to the specific gas and to the mixture which would have been formed by the holding gas and the filling gas.

11. Process according to any one of Claims 1 to 8, characterized in that the extraction step is a selective permeation which employs a permeation membrane having a selectivity in relation to the two gases which is greater than that which it exhibits in relation to the specific gas and to the mixture which would have been formed by the holding as and the filling gas.

12. Process according to any one of Claims 1 to 8, characterized in that the extraction step is a step of selective absorption, by means of an absorbent having a selectivity in relation to the two gases which is greater than that which it exhibits in relation to the specific gas and to the mixture which would have been formed by the holding gas and the filling gas.

13. Process according to any one of the preceding claims, characterized in that the specific gas contains argon, or neon, or krypton, or xenon, or sulphur hexafluoride, and in that the purging gas contains argon, or carbon dioxide, or helium, or hydrogen.

14. Process according to any one of the preceding claims, applied to the filling of the gap between multiple glazings with the said specific gas.

15. Process of employing a specific gas in an enclosure initially containing a holding gas, this process including a step of introducing a filling gas containing the specific gas into the enclosure (10), characterized in that before the step of introducing the filling gas, the enclosure (10) is purged by means of a purging gas which differs from the fill and holding gases, in that there is provided a step of extracting the specific gas from the mixture collected at the outlet of the enclosure during the step of introducing the filling gas, in that after the step of introducing the filling gas, the enclosure is again purged by means of a purging gas which differs from the fill and holding gases, before again introducing holding gas into the enclosure, and in that there is provided a step of extracting the specific gas from the mixture collected at the outlet of the enclosure (10) at least during this last purging of the enclosure.

16. Process according to Claim 15, characterized in that it furthermore includes, after the step of introducing the filling gas, a succession of alternate steps of purging the enclosure (10) with the purging gas and of steps of introducing the filling gas into the enclosure, as well as steps of extracting the specific gas from the mixture collected at the outlet of the enclosure (10) at least during each of the said purge steps.

17. Installation for employing the process according to any one of the preceding claims, including an enclosure (10) for employing a filling gas, which enclosure is initially filled with a holding gas, which includes an inlet (22) connected to a filling gas feed pipe (26), as well as a discharge outlet (34) connected to a device (38) for extracting a specific gas initially contained in the filling gas or in the holding gas, this extraction device being furnished with a discharge outlet (50A) for the extracted specific gas, characterized in that the enclosure includes another inlet (12) connected to a purging gas feed pipe (16).

18. Installation according to Claim 17, characterized in that the discharge outlet (50A) for the extracted specific gas is connected to the filling gas feed pipe (26).

19. Installation according to Claim 17 or 18, characterized in that the extraction device (38) is a device for separating the purging gas and the specific gas, and in that it furthermore includes an outlet (52A) for discharging the separated purging gas, connected to the purging gas feed pipe (16).
